# FASCICULE DE BREVET EUROPEEN

(11) **EP 3 510 713 B1**
(45) Date de publication et mention de la délivrance du brevet: **28.10.2020**
(21) Numéro de dépôt: 17768729.0
(22) Date de dépôt: 08.09.2017
(51) Int. Cl.: H04L 1/18, H04L 12/06, H04L 12/08, H04L 12/66, H04L 1/08, H04L 12/46

(54) **PROCÉDÉ DE DÉTECTION DE RÉÉMISSION D'UNE TRAME**
VERFAHREN ZUR DETEKTION DER NEUÜBERTRAGUNG EINES RAHMENS
METHOD FOR DETECTING RETRANSMISSION OF A FRAME

(30) Priorité: 12.09.2016 FR 1658453
(43) Date de publication de la demande: 17.07.2019
(73) Titulaire: Sagemcom Energy & Telecom SAS, 92500 Rueil-Malmaison (FR)
(72) Inventeur: SENNOUN, Yassir, 92500 Rueil Malmaison (FR)
(74) Mandataire: Cabinet Le Guen Maillet
(86) Numéro de dépôt international: PCT/EP2017/072627
(87) Numéro de publication internationale: WO 2018/046686

(56) Documents cités:
- US-A1- 2015 188 669
- US-B1- 7 971 253

## Description

La présente invention concerne le domaine général des télécommunications. L'invention concerne plus particulièrement le domaine des communications sans fil pour des objets communicants (« *Machine to Machine* - *M2M* » en anglais), et plus spécifiquement le domaine des réseaux de communication dits « réseaux étendus à longue portée » (« *Long Range Wide-area network* -*LoRaWAN* » en anglais).

Un réseau étendu à longue portée permet la connexion d'objets communicants et obéit à des contraintes différentes que celles d'un réseau de communication classique tel un réseau GSM (« *Global System for Mobile* » en anglais) ou un réseau UMTS (« *Universal Mobile Telecommunications System* » en anglais). En particulier, ce type de réseau utilise fréquemment des bandes de fréquences dites « bandes ISM » (*Industriel, Scientifique et Médical*). Ces bandes de fréquences sont donc partagées par plusieurs opérateurs de réseaux, il est alors nécessaire de réduire au minimum la consommation de la ressource radio disponible.

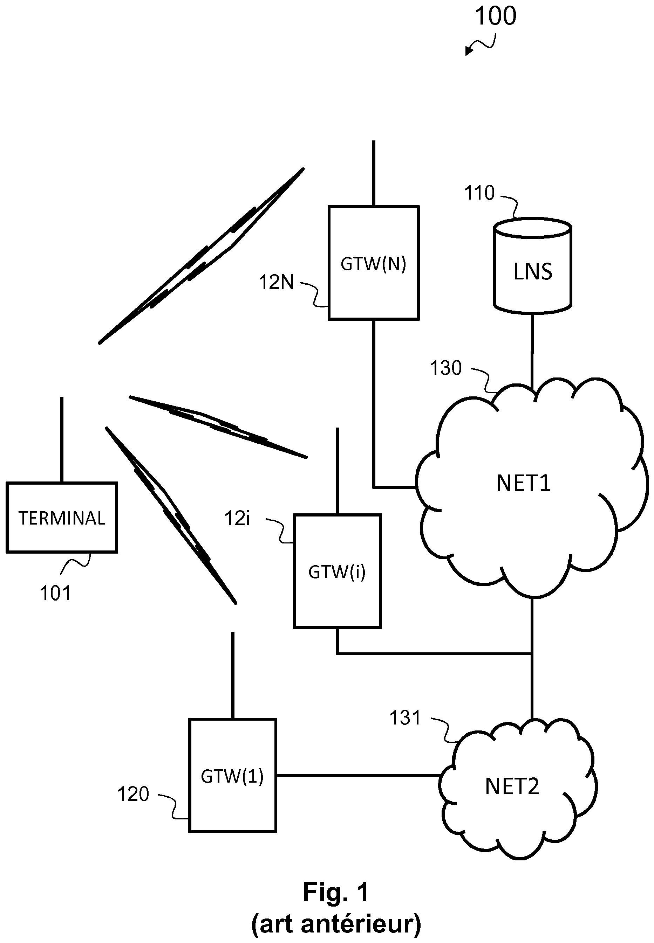

La **Fig. 1** illustre une architecture classique d'un réseau de communication permettant à un objet connecté 101 de communiquer avec un serveur central 110. La description ci-après met l'accent sur la norme *LoRa*™ (norme publiée par la «*LoRa Alliance* ») mais d'autres technologies de communications sont possibles. L'objet connecté ou terminal 101 est typiquement un dispositif électronique comprenant un émetteur radio. L'émetteur radio est adapté pour émettre et recevoir des trames ou messages via une fréquence porteuse parmi une pluralité de fréquences porteuses comprises dans une bande de fréquence prédéterminée, par exemple une bande fréquence ISM. Lorsque l'émetteur radio émet une trame, celle-ci peut être reçue par un ou plusieurs des récepteurs radio ou passerelles 120, 12i,..., 12N (« N» étant supérieur à « 0 » et « i » compris entre « 0 » et « N »). L'objet connecté 101 étant potentiellement mobile, contrairement aux passerelles 120, 12i,..., 12N qui sont placées en des points fixes, une trame émise par l'objet connecté 101 peut être reçue par une ou plusieurs passerelles 120, 12i,..., 12N. Chaque passerelle 120, 12i,..., 12N est connectée, possiblement via un réseau et une technologie différente, à un serveur central 110 dit serveur LNS (« *LoRa Network Server* » en anglais). Chaque passerelle 120, 12i,..., 12N recevant une trame en provenance de l'objet connecté 101 transmet ensuite cette trame vers le serveur central 110. Si une trame émise par l'objet connecté 101 est reçue par «m» passerelles 120, 12i,..., 12N, alors le serveur central reçoit « m» exemplaires ou copies de cette même trame retransmise par lesdites « m » passerelles (sauf problème de communication entre une passerelle et le serveur central 110 entraînant une perte de trame). Il est à noter que chaque passerelle 120, 12i,..., 12N est connectée au serveur central 110 par un réseau de communication qui peut être différent. Ainsi, comme illustré dans la Fig. 1, la passerelle 120, 12i,..., 12N est connectée au serveur central 110 via le réseau 131 et le réseau 130, possiblement de technologie différente. Chaque réseau de communication, par exemple les réseaux de communications 130 ou 131, permettant la connexion d'une passerelle 120, 12i,..., 12N au serveur central 110 peut donc entraîner un retard de transmission des trames (ou latence) différent, retard de transmission qui peut être lié à la technologie employée par le réseau de communication, mais aussi possiblement à une congestion dudit réseau de communication. Le retard de transmission est typiquement de l'ordre de la dizaine ou centaine de millisecondes, mais peut atteindre plusieurs secondes dans certains cas.

Quand le serveur central 110 reçoit une trame en provenance de l'objet connecté 101, la norme *LoRa™* définit un délai de réponse (ci-après « RXDelay ») afin que le serveur central 110 puisse répondre, par l'envoi d'une trame, à l'objet connecté 101. En effet, afin de réduire la consommation d'énergie, l'objet connecté 101 peut, suite à l'envoi d'une trame, se mettre en veille, et ne se remettre à l'écoute d'une éventuelle réponse qu'à l'expiration du délai de réponse, et ce pour un temps donné. Possiblement, la norme peut même définir plusieurs délais de réponses possibles (par exemple « *RX1 Delay* » et « *RX2 Delay* » pour la norme *LoRa*™), l'objet connecté se mettant en écoute d'une possible réponse à l'expiration de chaque délai pour un temps donné. La valeur du ou des délais de réponses est paramétrée par un opérateur du réseau de communication. Typiquement, une valeur d'un délai de réponse est de l'ordre d'une ou plusieurs secondes.

Chaque trame émise comprend un compteur (« *frame counter* » en anglais, ci-après « FcntUp »), la valeur du compteur étant incrémentée à chaque émission d'une nouvelle trame par l'objet connecté 101. En l'absence de réponse à une trame précédemment envoyée, l'objet connecté 101 peut réémettre ladite trame. Selon la norme *LoRa™,* la valeur du compteur « FcntUp » pour la trame réémise est identique à celle de la trame précédemment émise. Dit autrement, une trame et une trame réémise correspondante ont une même valeur du compteur « FcntUp ».

Lorsque l'objet connecté 101 est connecté à plus d'une seule passerelle 120, 12i,..., 12N, le serveur central 110 peut donc potentiellement recevoir plusieurs trames, retransmises par plusieurs passerelles 120, 12i,..., 12N, ces trames comportant toutes un compteur avec la même valeur : chaque trame peut correspondre soit à un exemplaire de la trame émise par l'objet connecté 101 ayant transité par une passerelle 120, 12i,..., 12N différente, soit à une possible réémission de la trame. A noter qu'une trame réémise peut elle-même être reçue en plusieurs exemplaires par le serveur central 110 si elle transite via plusieurs passerelles 120, 12i,..., 12N.

Il est souhaitable d'éviter de répondre à toutes les trames reçues afin d'éviter une consommation inutile de la ressource radio. En plus de la consommation de la ressource radio qu'exigerait l'envoi d'une trame vers l'objet connecté 101 par une des passerelles 120, 12i,..., 12N, il est à noter que la norme *LoRa™* définit un mécanisme de limitation de la consommation de la ressource radio dit « Duty Cycle » pour chaque passerelle 120, 12i,..., 12N, ledit mécanisme visant à ce qu'une passerelle 120, 12i,..., 12N ne puisse émettre plus qu'un certain pourcentage de temps sur certaines fréquences. Il est ainsi d'autant plus souhaitable de limiter l'envoi de trames vers l'objet connecté 101 afin de limiter l'usage des passerelles en émission vers un objet connecté.

Pour cela, il est nécessaire de proposer un procédé permettant à un serveur central 110 de distinguer, pour deux trames comportant une même valeur de compteur « FcntUp » émise par le même objet connecté 101, entre une réémission de la trame et une réception d'un autre exemplaire de la trame via une autre passerelle. Une réponse est probablement à envoyer dans le premier cas alors que dans le second cas, la trame peut probablement être ignorée, ce qui préserve la ressource radio.

Le document US 7 971 253 B1 fournit une méthode de détection d'intrusion (attaque) pour des réseaux locaux (LAN) avec des extensions sans fil, en analysant les numéros de séquence et la différence de séquence de messages reçus.

L'invention concerne un procédé de détection d'une réémission par un dispositif électronique d'une trame précédemment émise par le dispositif électronique, le dispositif électronique émettant chaque trame sur une fréquence porteuse parmi une pluralité prédéterminée de fréquences porteuses, chaque trame émise comprenant un identifiant associé au dispositif électronique et un compteur, la valeur du compteur restant identique lors de la réémission d'une trame et étant incrémentée lors de l'émission d'une nouvelle trame, chaque trame émise étant reçue par une pluralité de récepteurs radio, dits passerelles, chaque passerelle étant connectée à un même serveur central et retransmettant chaque trame reçue au serveur central, un délai de réponse étant prédéfini pour émettre en retour une trame vers le dispositif électronique. Le procédé est exécuté par le serveur central et comprend les étapes de recevoir une première trame comprenant un premier identifiant et un premier compteur, déterminer un premier temps de réception de la première trame, mémoriser comme paramètres de référence associés au premier identifiant le premier temps de réception et la valeur du premier compteur, recevoir une deuxième trame comprenant un deuxième identifiant et un deuxième compteur, si le deuxième identifiant est égal au premier identifiant et si la valeur du deuxième compteur est égale à la valeur du premier compteur, alors déterminer un deuxième temps de réception de la deuxième trame et, si la différence entre le deuxième temps de réception et le premier temps de réception est supérieure au délai de réponse prédéfini, alors la deuxième trame est considérée comme étant une réémission de la première trame, et mettre à jour les paramètres de référence associés au premier identifiant en remplaçant le premier temps de réception par le deuxième temps de réception.

Selon un mode de réalisation complémentaire de l'invention, la deuxième passerelle étant synchronisée en temps avec le serveur central, si la deuxième trame est considérée comme étant une réémission de la première trame et que le deuxième temps de réception est inférieur au premier temps de réception, alors la première trame est considérée comme étant une réémission de la deuxième trame et l'étape de mettre à jour les paramètres de référence associés au premier identifiant n'est pas exécutée.

Selon un mode de réalisation complémentaire de l'invention, la deuxième passerelle n'étant pas synchronisée en temps avec le serveur central, la première trame étant émise sur une première fréquence porteuse, la première fréquence porteuse étant mémorisée comme paramètre de référence associé au premier identifiant, la deuxième trame étant émise sur une deuxième fréquence porteuse, si la différence entre le deuxième temps de réception et le premier temps de réception n'est pas supérieure au délai de réponse prédéfini et que la deuxième fréquence porteuse est différente de la première fréquence porteuse, alors la deuxième trame est considérée comme étant une réémission de la première trame, et le procédé comprend l'étape de mettre à jour les paramètres de référence associés au premier identifiant en remplaçant le premier temps de réception par le deuxième temps de réception et la première fréquence porteuse par la deuxième fréquence porteuse.

Selon un mode de réalisation complémentaire de l'invention, si la valeur du deuxième compteur est supérieure à la valeur du premier compteur, alors le procédé comprend une étape de mettre à jour les paramètres de référence associés au premier identifiant en remplaçant le premier temps de réception par le deuxième temps de réception, la première fréquence porteuse par la deuxième fréquence porteuse et la valeur du premier compteur par la valeur du deuxième compteur.

L'invention concerne également un serveur central d'un réseau de communication comprenant au moins un dispositif électronique émettant une trame sur une fréquence porteuse parmi une pluralité prédéterminée de fréquences porteuses, chaque trame émise comprenant un identifiant associé au dispositif électronique et un compteur, la valeur du compteur restant identique lors de la réémission d'une trame et étant incrémentée lors de l'émission d'une nouvelle trame, chaque trame émise étant reçue par une pluralité de récepteurs radio, dits passerelles, chaque passerelle étant connectée au serveur central et retransmettant chaque trame reçue au serveur central, un délai de réponse étant prédéfini pour émettre en retour une trame vers le dispositif électronique, le serveur central étant adapté pour recevoir une première trame comprenant un premier identifiant et un premier compteur, déterminer un premier temps de réception de la première trame, mémoriser comme paramètres de référence associés au premier identifiant le premier temps de réception et la valeur du premier compteur, recevoir une deuxième trame comprenant un deuxième identifiant et un deuxième compteur, si le deuxième identifiant est égal au premier identifiant, et, si la valeur du deuxième compteur est égale à la valeur du premier compteur, alors déterminer un deuxième temps de réception de la deuxième trame et, si la différence entre le deuxième temps de réception et le premier temps de réception est supérieure au délai de réponse prédéfini, alors la deuxième trame est considérée comme étant une réémission de la première trame et mettre à jour les paramètres de référence associés au premier identifiant en remplaçant le premier temps de réception par le deuxième temps de réception.

Selon un mode de réalisation complémentaire, la deuxième passerelle étant synchronisée en temps avec le serveur central, si la deuxième trame est considérée comme étant une réémission de la première trame et que le deuxième temps de réception est inférieur au premier temps de réception, alors la première trame est considérée comme étant une réémission de la deuxième trame et le serveur central est adapté pour ne pas mettre à jour les paramètres de référence associés au premier identifiant.

Selon un mode de réalisation complémentaire, la deuxième passerelle n'étant pas synchronisée en temps avec le serveur central, la première trame étant émise sur une première fréquence porteuse, le serveur central étant adapté pour mémoriser la première fréquence porteuse comme paramètre de référence associé au premier identifiant, la deuxième trame étant émise sur une deuxième fréquence porteuse, si la différence entre le deuxième temps de réception et le premier temps de réception n'est pas supérieure au délai de réponse prédéfini et que la deuxième fréquence porteuse est différente de la première fréquence porteuse, alors la deuxième trame est considérée comme étant une réémission de la première trame, et le serveur central est adapté pour mettre à jour les paramètres de référence associés au premier identifiant en remplaçant le premier temps de réception par le deuxième temps de réception et la première fréquence porteuse par la deuxième fréquence porteuse.

Selon un mode de réalisation complémentaire, si la valeur du deuxième compteur est supérieure à la valeur du premier compteur, alors le serveur central est adapté pour mettre à jour les paramètres de référence associés au premier identifiant en remplaçant le premier temps de réception par le deuxième temps de réception, la première fréquence porteuse par la deuxième fréquence porteuse et la valeur du premier compteur par la valeur du deuxième compteur.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes mentionnées ci-dessous, lorsque ledit programme est exécuté par le processeur.

L'invention concerne également un medium de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement une architecture classique d'un réseau de communication dit « réseau étendu à longue portée », typiquement conforme à une norme *LoRa™* ;
- les **Fig. 2****,** **3** **et** **4** illustrent schématiquement un procédé permettant la détection d'une réémission par un émetteur radio d'une trame précédemment émise par l'émetteur radio, selon un mode de réalisation de l'invention ;
- la **Fig. 5** illustre schématiquement l'architecture matérielle d'un serveur adapté pour mettre en œuvre un procédé permettant la détection d'une réémission par un émetteur radio d'une trame précédemment émise par l'émetteur radio, selon un mode de réalisation de l'invention.

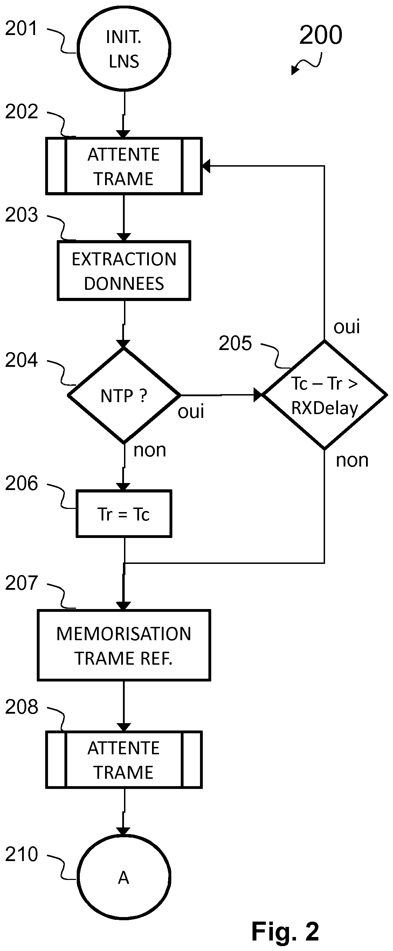

Les **Fig. 2****,** **3** **et** **4** illustrent schématiquement un procédé 200 permettant la détection d'une réémission par un émetteur radio compris dans le dispositif électronique 101 d'une trame précédemment émise par l'émetteur radio, selon un mode de réalisation de l'invention, le procédé 200 étant exécuté par le serveur central 110.

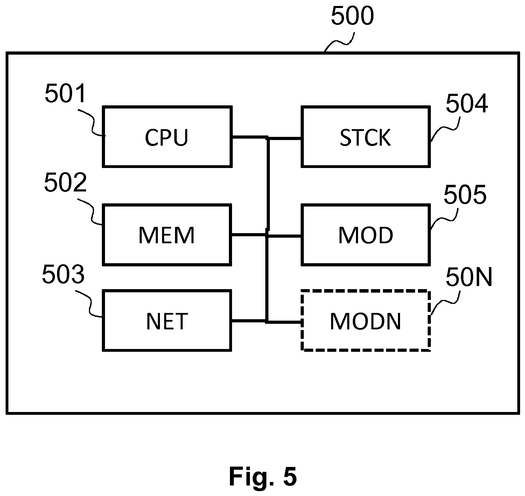

L'étape 201 correspond à l'initialisation du serveur central 110, suite par exemple à sa mise sous tension. Lors de cette étape 201, comme décrit ci-après dans la Fig. 5, le serveur central 110 est adapté pour charger dans une mémoire les instructions permettant l'exécution du procédé 200. Lors de l'étape 201, des connexions peuvent être établies avec les passerelles 120, 12i,..., 12N. Le serveur central 110 peut comprendre une fonction de synchronisation temporelle permettant à des passerelles parmi les passerelles 120, 12i,..., 12N de se synchroniser en temps. Le serveur central 110 peut comprendre une fonction de relais de synchronisation temporelle. Typiquement, le serveur central 110 est un relais NTP (« *Network Time Protocol* » en anglais) permettant aux passerelles 120, 12i,..., 12N connectées au serveur central 110 de bénéficier d'une synchronisation temporelle avec le serveur central 110. Le serveur central 110 peut lui-même se synchroniser auprès d'un serveur NTP (non représenté). Selon un mode de réalisation complémentaire, les passerelles 120, 12i,..., 12N se synchronisent en temps auprès d'un serveur NTP, possiblement le même que celui utilisé par le serveur central 110 pour se synchroniser. Selon un mode de réalisation complémentaire, les passerelles 120, 12i,..., 12N et/ou le serveur central 110 se synchronisent en temps via une technologie de type GPS (« *Global Positioning System* » en anglais) ou *Glonass.*

Dans une étape suivante 202, le serveur central 110 attend de recevoir une première trame. Ladite trame correspond à une trame émise par un dispositif électronique tel le dispositif électronique ou terminal 101. Le dispositif électronique 101 émet une trame sur une fréquence porteuse parmi une pluralité prédéterminée de fréquences porteuses, la trame émise comprenant un identifiant associé au dispositif électronique 101 et un compteur « FcntUp », la valeur du compteur « FcntUp » restant identique lors de la réémission d'une trame et étant incrémentée lors de l'émission d'une nouvelle trame. Ladite trame est reçue par au moins une passerelle 120, 12i,..., 12N et retransmise par au moins la passerelle 120, 12i,..., 12N au serveur central 110. L'étape 202 correspond à la réception d'une première trame suite à la mise sous tension du serveur central 110. Lors de la retransmission d'une trame vers le serveur central 110, chaque passerelle 120, 12i,..., 12N ajoute une information permettant l'identification de ladite passerelle, une information sur le temps de réception « Tr » de la trame ainsi qu'une information sur la fréquence porteuse sur laquelle la trame a été reçue. Possiblement, chaque passerelle 120, 12i,..., 12N ajoute aussi une information permettant de savoir si ladite passerelle est synchronisée en temps. Ainsi, l'information peut indiquer si chaque passerelle 120, 12i,..., 12N est synchronisée en temps sur un serveur NTP, par exemple si le serveur central 110 offre une fonction de serveur NTP, ou par exemple si une passerelle 120, 12i,..., 12N comprend un récepteur type GPS.

Le temps de réception « Tr » de la trame par une passerelle 120, 12i,..., 12N correspond à un horodatage du moment de réception de la trame par la passerelle 120, 12i,..., 12N. Ce temps de réception « Tr » est retransmis par chaque passerelle 120, 12i,..., 12N avec chaque trame retransmise.

Dans une étape suivante 203, le serveur central 110 extrait les données comprises dans la trame reçue lors de l'étape précédente 202. Les données correspondent au moins à l'identifiant associé au dispositif électronique 101, à la valeur du compteur « FcntUp », à une information permettant l'identification de la passerelle 120, 12i,..., 12N ayant retransmis la trame et à l'information sur la fréquence porteuse sur laquelle la trame a été reçue par la passerelle 120, 12i,..., 12N. Le serveur central 110 peut extraire une information retransmise par la passerelle 120, 12i,..., 12N indiquant si ladite passerelle 120, 12i,..., 12N est synchronisée en temps avec le serveur central 110. Alternativement, le serveur central 110, s'il fait fonction de serveur NTP, peut déterminer si une passerelle 120, 12i,..., 12N se synchronise avec ledit serveur NTP.

Dans une étape suivante 204, le serveur central 110 détermine si la passerelle 120, 12i,..., 12N ayant retransmis la première trame reçue lors de l'étape 202 est synchronisée en temps, par exemple via un serveur NTP.

Si c'est le cas, dans une étape 205, le serveur central 110 détermine le temps courant et le délai qui s'est écoulé entre le temps courant « Tc » et le temps de réception « Tr » indiqué par la passerelle 120, 12i,..., 12N. Dit autrement, lors de l'étape 205, le serveur central 110 détermine le délai écoulé depuis le temps de réception « Tr ». Si ce délai est supérieur au délai de réponse « RXDelay », alors il est trop tard pour répondre à la trame reçue, la trame est ignorée et le serveur central 110 retourne à l'étape 202 en attente d'une nouvelle trame. Si ce délai est inférieur au délai de réponse « RXDelay », alors le serveur central 110 passe à l'étape 207.

Si ce n'est pas le cas, c'est-à-dire que la passerelle 120, 12i,..., 12N ayant retransmis la trame reçue n'est pas synchronisée en temps, alors le serveur central 110 considère que le temps de réception « Tr » indiqué par la passerelle n'est pas fiable. La valeur du temps de réception « Tr » est alors mise à jour et remplacée par la valeur du temps courant « Tc », c'est-à-dire le temps de réception de la trame par le serveur central 110, et non pas celui indiqué par la passerelle 120, 12i,..., 12N. Le serveur central 110 passe ensuite à l'étape 207.

Dans l'étape 207, le serveur central 110 enregistre les données extraites lors de l'étape 203 comme étant des paramètres de référence associés à un identifiant d'un dispositif électronique pour la suite du procédé 200. Si le temps de réception « Tr » a été mis à jour lors de l'étape 206, la nouvelle valeur du temps de réception « Tr » (c'est à dire le temps courant « Tc » du serveur central 110 lors de la réception de la trame) est enregistrée. Dit autrement, le serveur central 110 considère comme paramètres de référence associés à l'identifiant du dispositif électronique 101 le temps de réception « Tr », la fréquence de la porteuse et la valeur du compteur « FcntUp », ces paramètres étant enregistrés ou mémorisés par le serveur central 110 dans une mémoire ou un module de stockage, comme décrit dans la Fig. 5. Le temps de réception « Tr » enregistré comme paramètre de référence lors de cette étape 207 est appelé temps de réception de référence, ci-après « Tref ».

Dans une étape suivante 208, le serveur central 110 est en attente d'une nouvelle trame.

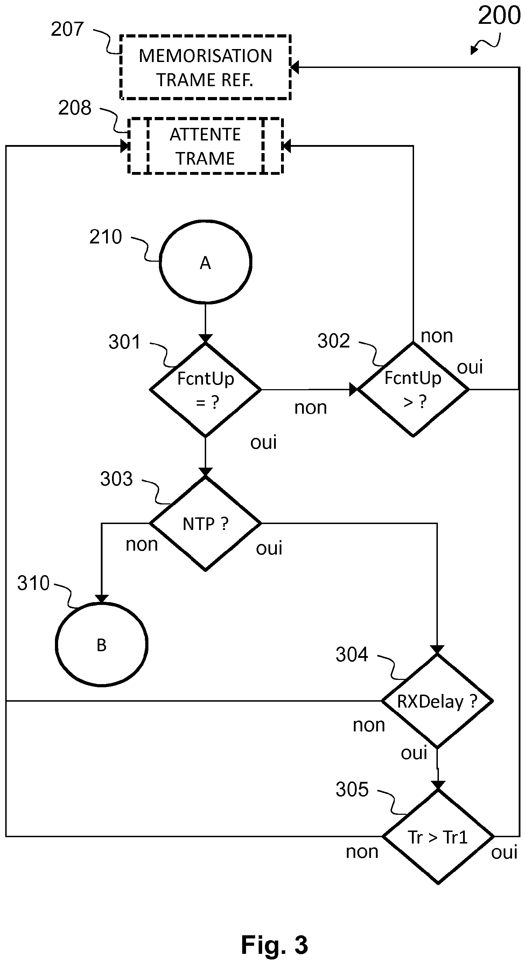

Si une nouvelle trame est reçue par le serveur central 110, le serveur central 110 détermine l'identifiant du dispositif électronique ayant émis la trame. Si l'identifiant est égal à un identifiant d'un dispositif électronique enregistré, le serveur central 110 détermine que cette nouvelle trame a été émise par le même dispositif électronique et retrouve les paramètres de référence associés à l'identifiant. Ensuite, le serveur central 110 passe à l'étape 301 (Fig. 3).

Si la nouvelle trame reçue comprend un identifiant non précédemment enregistré en association avec des paramètres de référence, alors le serveur central 110 passe à l'étape 203.

Ainsi, l'étape 301 est exécutée par le serveur central 110 suite à la réception d'une deuxième trame, émise par exemple par le dispositif électronique 101, alors que des paramètres de référence associés à l'identifiant du même dispositif électronique 101, et issus d'une première trame, ont précédemment été enregistrés lors d'une étape 207.

Lors de l'étape 301, le serveur central 110 détermine la valeur du compteur « FcntUp » de la deuxième trame reçue.

Si la valeur du compteur « FcntUp » de la deuxième trame reçue est égale à la valeur du compteur « FcntUp » enregistrée comme paramètre de référence en association avec l'identifiant du dispositif électronique 101, alors le serveur central 110 doit déterminer si la deuxième trame est une réémission de la première trame ou non. Le serveur central 110 passe alors à l'étape 303.

Sinon, le serveur central 110 passe à l'étape 302.

Lors de l'étape 302, si la valeur du compteur « FcntUp » de la deuxième trame reçue est inférieure à la valeur du compteur « FcntUp » enregistrée comme paramètre de référence en association avec l'identifiant du dispositif électronique 101, alors la deuxième trame est ignorée et le serveur central 110 repasse à l'étape 208. Si la valeur du compteur « FcntUp » de la deuxième trame reçue est supérieure à la valeur du compteur « FcntUp » enregistrée comme paramètre de référence en association avec l'identifiant du dispositif électronique 101, alors le serveur central 110 repasse à l'étape 207. Lors de cette nouvelle étape 207, le serveur central 110 met à jour les paramètres de référence associés à l'identifiant du dispositif électronique 101 avec les données extraites de la deuxième trame. Dit autrement, le serveur central 110 extrait les données de la valeur du compteur « FcntUp » de la deuxième trame, la fréquence porteuse utilisée pour l'émission de la deuxième trame et le temps de réception « Tr » de la deuxième trame pour mettre à jour les paramètres de référence associés à l'identifiant du dispositif électronique 101. Concernant le temps de réception « Tr » de la deuxième trame, celui-ci est directement mémorisé si la passerelle ayant retransmis la deuxième trame est synchronisée en temps. Sinon, le temps courant « Tc » du serveur central 110 est mémorisé à la place comme paramètres de référence associés à l'identifiant du dispositif électronique 101. Dit autrement, le temps de réception de référence « Tref » est mis à jour avec le temps de réception « Tr » si la passerelle ayant retransmis la deuxième trame est synchronisée en temps, ou avec le temps courant « Tc » sinon.

Dans l'étape 303, le serveur central 110 détermine si la passerelle ayant retransmis la deuxième trame est synchronisée en temps.

Si c'est le cas, le serveur central 110 passe à l'étape 304.

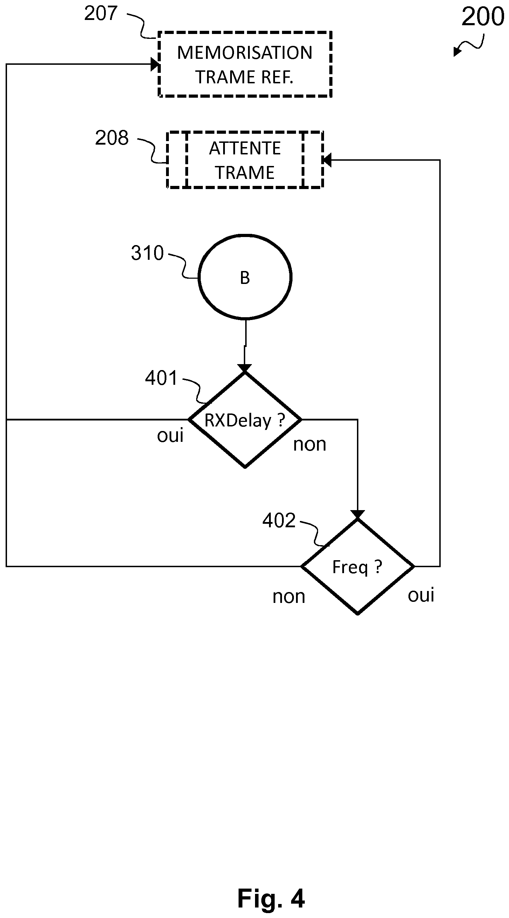

Si ce n'est pas le cas, le serveur central 110 passe à l'étape 401 (Fig. 4).

Dans l'étape 304, le serveur central 110 détermine le délai écoulé entre le temps de réception « Tr » de la deuxième trame et le temps de réception de référence « Tref ».

Si le délai écoulé, en valeur absolue, est inférieur au délai de réponse « RXDelay », alors le serveur central 110 détermine que la deuxième trame reçue est un exemplaire (dit autrement, une copie) de la première trame reçue par une autre passerelle. La deuxième trame peut ainsi être ignorée, le serveur central 110 repasse ensuite à l'étape 208 en attente d'une nouvelle trame.

Si le délai écoulé, en valeur absolue, est supérieur au délai de réponse « RXDelay », alors le serveur central 110 passe à l'étape 305.

Dans l'étape 305, le serveur central 110 compare le temps de réception « Tr » de la deuxième trame et le temps de réception de référence « Tref ».

Si le temps de réception « Tr » de la deuxième trame est inférieur au temps de réception de référence « Tref », alors le serveur central 110 détermine que la première trame, dont les données sont mémorisées en paramètres de référence, est une réémission de la deuxième trame. La deuxième trame peut être ignorée par le serveur central 110 et le serveur central 110 repasse à l'étape 208 en attente d'une nouvelle trame.

Si le temps de réception « Tr » de la deuxième trame est supérieur au temps de réception de référence « Tref », alors le serveur central 110 détermine que la deuxième trame est une réémission de la première trame, dont les données sont mémorisées en paramètres de référence. Le serveur central 110 repasse alors à l'étape 207. Lors de cette nouvelle étape 207, le serveur central 110 met à jour les paramètres de référence associés à l'identifiant du dispositif électronique 101 avec les données extraites de la deuxième trame. Dit autrement, le serveur central 110 extrait les données de la valeur du compteur « FcntUp » de la deuxième trame, la fréquence porteuse utilisée pour l'émission de la deuxième trame et le temps de réception « Tr » de la deuxième trame pour mettre à jour les paramètres de référence associés à l'identifiant du dispositif électronique 101. Concernant le temps de réception « Tr » de la deuxième trame, celui-ci est directement mémorisé si la passerelle ayant retransmis la deuxième trame est synchronisée en temps. Sinon, le temps courant « Tc » du serveur central 110 est mémorisé à la place comme paramètres de référence associés à l'identifiant du dispositif électronique 101. Dit autrement, le temps de réception de référence « Tref » est mis à jour avec le temps de réception « Tr » de la deuxième trame si la passerelle ayant retransmis la deuxième trame est synchronisée en temps, ou avec le temps courant « Tc » sinon.

Dans l'étape 401, le serveur central 110 détermine le délai écoulé entre le temps courant « Tc » du serveur central 110 et le temps de réception de référence « Tref ». Cette étape est similaire à l'étape 304, avec la différence que le serveur central 110 utilise le temps courant « Tc » plutôt que le temps de réception « Tr » de la deuxième trame, ce dernier temps étant fourni par une passerelle non synchronisée en temps.

Si ce délai écoulé est supérieur au délai de réponse « RXDelay », alors le serveur central 110 détermine que la deuxième trame est une réémission de la première trame. Le serveur central 110 repasse à l'étape 207 et met à jour les paramètres de référence en mettant à jour les valeurs du temps de réception de référence « Tref », ce temps de réception de référence « Tref » prenant la valeur du temps courant « Tc ». Le serveur central 110 met aussi à jour la fréquence porteuse utilisée par la deuxième trame pour son émission.

Si le délai écoulé est inférieur au délai de réponse « RXDelay », le serveur central 110 passe à l'étape 402.

Dans l'étape 402, le serveur central 110 détermine si la deuxième trame a été émise sur la même fréquence porteuse que la première trame. En effet, la norme *LoRa™* impose qu'une nouvelle fréquence porteuse soit choisie, au hasard, parmi la pluralité de fréquences porteuses possibles, pour la réémission d'une trame. Au contraire, si deux trames reçues sont deux exemplaires d'une même trame émise, la fréquence porteuse est par définition la même. Ainsi, si la première et la deuxième trame sont reçues via deux fréquences porteuses différentes, il ne peut s'agir de deux exemplaires d'une même trame. Par conséquent, si le serveur central 110 détermine que les fréquences porteuses sont différentes, le serveur central 110 détermine que la deuxième trame est une réémission de la première trame. Le serveur central 110 repasse à l'étape 207 et met à jour les paramètres de référence avec les données associées à la deuxième trame. En particulier, le temps de réception de référence « Tref » est mis à jour avec la valeur du temps courant « Tc ».

Au contraire, si le serveur central 110 détermine que la première trame et la deuxième trame ont été émises sur une même fréquence porteuse, le serveur central 110 détermine alors que la deuxième trame est un exemplaire de la première trame reçu via une passerelle différente. En effet, dans ce cas précis, la deuxième trame pourrait être une réémission de la première trame, une réémission pouvant s'effectuer sur la même fréquence porteuse puisque celle-ci est choisie au hasard. Cependant, la probabilité est plus grande que lors d'une réémission, une fréquence différente soit utilisée, par conséquent le serveur central 110 détermine que la deuxième trame est plus probablement un exemplaire de la première trame reçue via une passerelle différente. Le serveur central 110 ignore la deuxième trame et repasse ensuite à l'étape 208.

La **Fig. 5** illustre schématiquement l'architecture matérielle d'un serveur 500, par exemple le serveur central 110, adapté pour mettre en œuvre le procédé permettant la détection d'une réémission par un émetteur radio d'une trame précédemment émise par l'émetteur radio décrit dans les Figs. 2, 3 et 4. Le serveur 500 comporte, reliés par un bus de communication : un processeur ou CPU (« *Central Processing Unit* » en anglais) 501 ; une mémoire MEM 502 de type RAM (« *Random Access Memory* » en anglais) et/ou ROM (« *Read Only Memory* » en anglais), un module réseau NET 503, un module de stockage STCK 504 de type stockage interne et possiblement d'autres modules 505 à 50N de différentes natures. Le module de stockage STCK 504 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 501 peut enregistrer des données sur le module de stockage STCK 504 ou lire des données enregistrées sur le module de stockage STCK 504. Ces données peuvent correspondre à des paramètres de configuration du serveur 500 ou à des informations reçues par exemple dans un message reçu par le module réseau NET 503, ou via un autre module de communication 50N. Le module réseau NET 503 permet la connexion du serveur 500 à un ou plusieurs réseaux de communication. Le module réseau 503 permet typiquement la connexion du serveur 500 à *Internet.* Le module réseau 503 permet au serveur 500 d'envoyer, respectivement de recevoir, des trames à destination de, respectivement en provenance de, un ou plusieurs objets connectés, par exemple l'objet connecté 101, les trames transitant via une des passerelles 120, 12i,..., 12N.

Le processeur CPU 501 est capable d'exécuter des instructions chargées dans la mémoire MEM 502, par exemple à partir du module de stockage STCK 504 ou d'un réseau de communication via le module réseau NET 503, ou d'un autre module de communication 50N par exemple. Lorsque le serveur 500 est mis sous tension, le processeur CPU 501 est capable de lire de la mémoire MEM 502 des instructions et de les exécuter. Ces instructions forment un programme d'ordinateur causant la mise en œuvre, par le processeur CPU 501, de tout ou partie des procédés et étapes décrits ci-avant. Ainsi, tout ou partie des procédés et étapes décrits ci-avant peut être implémenté sous forme logicielle par exécution d'un ensemble d'instructions par une machine programmable, telle qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Le serveur 500 est typiquement un serveur dit « *LNS »* (« *LoRa Network Server* » en anglais), c'est-à-dire un serveur utilisé dans un réseau de communication conforme à la norme *LoRa™.*

Le serveur 500 est adapté pour mettre en œuvre tout ou partie des étapes du procédé 200 décrit dans les Figs. 2, 3 et 4 permettant la détection d'une réémission par un émetteur radio d'une trame précédemment émise par l'émetteur radio.

## Revendications

1. Procédé (200) de détection d'une réémission par un dispositif électronique (101) d'une trame précédemment émise par le dispositif électronique, le dispositif électronique émettant chaque trame sur une fréquence porteuse parmi une pluralité prédéterminée de fréquences porteuses, chaque trame émise comprenant un identifiant associé au dispositif électronique et un compteur, la valeur du compteur restant identique lors de la réémission d'une trame et étant incrémentée lors de l'émission d'une nouvelle trame, chaque trame émise étant reçue par une pluralité de récepteurs radio, dits passerelles (120, 12i,..., 12N), chaque passerelle étant connectée à un même serveur central (110) et retransmettant chaque trame reçue au serveur central, un délai de réponse étant prédéfini pour émettre en retour une trame vers le dispositif électronique, le procédé étant exécuté par le serveur central et comprenant les étapes de :
- recevoir (202, 208) une première trame comprenant un premier identifiant et un premier compteur,
- déterminer un premier temps de réception de la première trame,
- mémoriser (207) comme paramètres de référence associés au premier identifiant le premier temps de réception et la valeur du premier compteur,
- recevoir (208) une deuxième trame comprenant un deuxième identifiant et un deuxième compteur,
si le deuxième identifiant est égal au premier identifiant, et,
si la valeur du deuxième compteur est égale à la valeur du premier compteur, alors :
- déterminer un deuxième temps de réception de la deuxième trame, et,
si le délai écoulé entre le deuxième temps de réception et le premier temps de réception est supérieure au délai de réponse prédéfini, alors la deuxième trame est considérée comme étant une réémission de la première trame, et :
- mettre à jour (207) les paramètres de référence associés au premier identifiant en remplaçant le premier temps de réception par le deuxième temps de réception.

2. Procédé selon la revendication 1, **caractérisé en ce que**, la passerelle ayant retransmis la deuxième trame étant synchronisée en temps avec le serveur central, si en outre le deuxième temps de réception est inférieur au premier temps de réception, alors la première trame est considérée comme étant une réémission de la deuxième trame et l'étape (207) de mettre à jour les paramètres de référence associés au premier identifiant n'est pas exécutée.

3. Procédé selon l'une des revendications précédentes, **caractérisée en ce que**, la passerelle ayant retransmis la deuxième trame n'étant pas synchronisée en temps avec le serveur central, la première trame étant émise sur une première fréquence porteuse, la première fréquence porteuse étant mémorisée comme paramètres de référence associés au premier identifiant, la deuxième trame étant émise sur une deuxième fréquence porteuse, si le délai écoulé entre le deuxième temps de réception et le premier temps de réception n'est pas supérieure au délai de réponse prédéfini et que la deuxième fréquence porteuse est différente de la première fréquence porteuse, alors la deuxième trame est considérée comme étant une réémission de la première trame, et le procédé comprend l'étape de :
- mettre à jour les paramètres de référence associés au premier identifiant en remplaçant le premier temps de réception par le deuxième temps de réception et la première fréquence porteuse par la deuxième fréquence porteuse.

4. Procédé selon l'une des revendications précédentes, **caractérisé en ce que**, si la valeur du deuxième compteur est supérieure à la valeur du premier compteur, alors le procédé comprend une étape de :
- mettre à jour les paramètres de référence associés au premier identifiant en remplaçant le premier temps de réception par le deuxième temps de réception, la première fréquence porteuse par la deuxième fréquence porteuse et la valeur du premier compteur par la valeur du deuxième compteur.

5. Serveur central (110) d'un réseau de communication comprenant au moins un dispositif électronique (101) émettant une trame sur une fréquence porteuse parmi une pluralité prédéterminée de fréquences porteuses, chaque trame émise comprenant un identifiant associé au dispositif électronique et un compteur, la valeur du compteur restant identique lors de la réémission d'une trame et étant incrémentée lors de l'émission d'une nouvelle trame, chaque trame émise étant reçue par une pluralité de récepteurs radio, dits passerelles (120, 12i,..., 12N), chaque passerelle étant connectée au serveur central et retransmettant chaque trame reçue au serveur central, un délai de réponse étant prédéfini pour émettre en retour une trame vers le dispositif électronique, le serveur central étant adapté pour :
- recevoir une première trame comprenant un premier identifiant et un premier compteur,
- déterminer un premier temps de réception de la première trame,
- mémoriser comme paramètres de référence associés au premier identifiant le premier temps de réception et la valeur du premier compteur,
- recevoir une deuxième trame comprenant un deuxième identifiant et un deuxième compteur,
si le deuxième identifiant est égal au premier identifiant, et,
si la valeur du deuxième compteur est égale à la valeur du premier compteur, alors :
- déterminer un deuxième temps de réception de la deuxième trame, et,
si le délai écoulé entre le deuxième temps de réception et le premier temps de réception est supérieure au délai de réponse prédéfini, alors la deuxième trame est considérée comme étant une réémission de la première trame, et :
- mettre à jour les paramètres de référence associés au premier identifiant en remplaçant le premier temps de réception par le deuxième temps de réception.

6. Serveur central selon la revendication précédente, la passerelle ayant retransmis la deuxième trame étant synchronisée en temps avec le serveur central, le serveur central étant **caractérisé en ce que**, si en outre le deuxième temps de réception est inférieur au premier temps de réception, alors la première trame est considérée comme étant une réémission de la deuxième trame et le serveur central est adapté pour ne pas mettre à jour les paramètres de référence associés au premier identifiant.

7. Serveur central selon la revendication 5 ou 6, la passerelle ayant retransmis la deuxième trame n'étant pas synchronisée en temps avec le serveur central, la première trame étant émise sur une première fréquence porteuse, le serveur central étant adapté pour mémoriser la première fréquence porteuse comme paramètres de référence associés au premier identifiant, la deuxième trame étant émise sur une deuxième fréquence porteuse, le serveur central étant **caractérisé en ce que**, si le délai écoulé entre le deuxième temps de réception et le premier temps de réception n'est pas supérieure au délai de réponse prédéfini et que la deuxième fréquence porteuse est différente de la première fréquence porteuse, alors la deuxième trame est considérée comme étant une réémission de la première trame, et le serveur central est adapté pour :
- mettre à jour les paramètres de référence associés au premier identifiant en remplaçant le premier temps de réception par le deuxième temps de réception et la première fréquence porteuse par la deuxième fréquence porteuse.

8. Serveur central selon la revendication 5, 6 ou 7, le serveur central étant **caractérisé en ce que**, si la valeur du deuxième compteur est supérieure à la valeur du premier compteur, alors le serveur central est adapté pour :
- mettre à jour les paramètres de référence associés au premier identifiant en remplaçant le premier temps de réception par le deuxième temps de réception, la première fréquence porteuse par la deuxième fréquence porteuse et la valeur du premier compteur par la valeur du deuxième compteur.

9. Programme d'ordinateur, **caractérisé en ce qu'**il comprend des instructions pour mettre en œuvre, par un processeur (501), le procédé permettant la détection d'une réémission par un dispositif électronique d'une trame précédemment émise par le dispositif électronique, selon l'une quelconque des revendications 1 à 4, lorsque le programme d'ordinateur est exécuté par le processeur.

10. Support d'enregistrement sur lequel est stocké le programme selon la revendication 9.

## Patentansprüche

1. Verfahren (200) zur Detektion einer Neuübertragung, durch eine elektronische Vorrichtung (101), eines von der elektronischen Vorrichtung zuvor gesendeten Rahmens, wobei die elektronische Vorrichtung jeden Rahmen auf einer Trägerfrequenz aus einer vorbestimmten Vielzahl von Trägerfrequenzen sendet, wobei jeder gesendete Rahmen eine der elektronischen Vorrichtung zugeordnete Kennung und einen Zähler umfasst, wobei der Wert des Zählers bei der Neuübertragung eines Rahmens identisch bleibt und bei der Übertragung eines neuen Rahmens inkrementiert wird, wobei jeder gesendete Rahmen durch mehrere Funkempfänger, sogenannte Gateways (120, 12i, ..., 12N), empfangen wird, wobei jedes Gateway mit demselben zentralen Server (110) verbunden ist und jeden empfangenen Rahmen an den zentralen Server weitersendet, wobei eine Antwortverzögerung für das Zurücksenden eines Rahmens an die elektronische Vorrichtung vordefiniert ist, wobei das Verfahren von dem zentralen Server ausgeführt wird und die Schritte umfasst:
- Empfangen (202, 208) eines ersten Rahmens, der eine erste Kennung und einen ersten Zähler umfasst,
- Bestimmen einer ersten Empfangszeit des ersten Rahmens,
- Speichern (207), als der ersten Kennung zugeordnete Referenzparameter, der ersten Empfangszeit und des Wertes des ersten Zählers,
- Empfangen (208) eines zweiten Rahmens, der eine zweite Kennung und einen zweiten Zähler umfasst,
falls die zweite Kennung gleich der ersten Kennung ist, und
falls der Wert des zweiten Zählers gleich dem Wert des ersten Zählers ist, dann:
- Bestimmen einer zweiten Empfangszeit des zweiten Rahmens, und
falls die zwischen der zweiten Empfangszeit und der ersten Empfangszeit vergangene Zeitdauer länger als die vordefinierte Antwortverzögerung ist, wird dann der zweite Rahmen als eine Neuübertragung des ersten Rahmens betrachtet, und:
- Aktualisieren (207) der der ersten Kennung zugeordneten Referenzparameter, indem die erste Empfangszeit durch die zweite Empfangszeit ersetzt wird.

2. Verfahren nach Anspruch 1, **dadurch gekennzeichnet, dass**, wenn das Gateway, das den zweiten Rahmen weitergesendet hat, mit dem zentralen Server zeitlich synchronisiert ist, falls außerdem die zweite Empfangszeit kleiner als die erste Empfangszeit ist, der erste Rahmen dann als eine Neuübertragung des zweiten Rahmens betrachtet wird und der Schritt (207) des Aktualisierens der der ersten Kennung zugeordneten Referenzparameter nicht ausgeführt wird.

3. Verfahren nach einem der vorhergehenden Ansprüche, **dadurch gekennzeichnet, dass**, wenn das Gateway, das den zweiten Rahmen weitergesendet hat, nicht mit dem zentralen Server zeitlich synchronisiert ist, wobei der erste Rahmen auf einer ersten Trägerfrequenz gesendet wird, die erste Trägerfrequenz als der ersten Kennung zugeordneter Referenzparameter gespeichert wird, der zweite Rahmen auf einer zweiten Trägerfrequenz gesendet wird, falls die zwischen der zweiten Empfangszeit und der ersten Empfangszeit vergangene Zeitdauer nicht länger als die vordefinierte Antwortverzögerung ist und die zweite Trägerfrequenz von der ersten Trägerfrequenz verschieden ist, der zweite Rahmen dann als eine Neuübertragung des ersten Rahmens betrachtet wird und das Verfahren den Schritt umfasst:
- Aktualisieren der der ersten Kennung zugeordneten Referenzparameter, indem die erste Empfangszeit durch die zweite Empfangszeit und die erste Trägerfrequenz durch die zweite Trägerfrequenz ersetzt wird.

4. Verfahren nach einem der vorhergehenden Ansprüche, **dadurch gekennzeichnet, dass**, falls der Wert des zweiten Zählers größer als der Wert des ersten Zählers ist, das Verfahren dann einen Schritt umfasst:
- Aktualisieren der der ersten Kennung zugeordneten Referenzparameter, indem die erste Empfangszeit durch die zweite Empfangszeit, die erste Trägerfrequenz durch die zweite Trägerfrequenz und der Wert des ersten Zählers durch den Wert des zweiten Zählers ersetzt wird.

5. Zentraler Server (110) eines Kommunikationsnetzes, welches wenigstens eine elektronische Vorrichtung (101) umfasst, die einen Rahmen auf einer Trägerfrequenz aus einer vorbestimmten Vielzahl von Trägerfrequenzen sendet, wobei jeder gesendete Rahmen eine der elektronischen Vorrichtung zugeordnete Kennung und einen Zähler umfasst, wobei der Wert des Zählers bei der Neuübertragung eines Rahmens identisch bleibt und bei der Übertragung eines neuen Rahmens inkrementiert wird, wobei jeder gesendete Rahmen durch mehrere Funkempfänger, sogenannte Gateways (120, 12i, ..., 12N), empfangen wird, wobei jedes Gateway mit dem zentralen Server verbunden ist und jeden empfangenen Rahmen an den zentralen Server weitersendet, wobei eine Antwortverzögerung für das Zurücksenden eines Rahmens an die elektronische Vorrichtung vordefiniert ist, wobei der zentrale Server eingerichtet ist zum:
- Empfangen eines ersten Rahmens, der eine erste Kennung und einen ersten Zähler umfasst,
- Bestimmen einer ersten Empfangszeit des ersten Rahmens,
- Speichern, als der ersten Kennung zugeordnete Referenzparameter, der ersten Empfangszeit und des Wertes des ersten Zählers,
- Empfangen eines zweiten Rahmens, der eine zweite Kennung und einen zweiten Zähler umfasst,
falls die zweite Kennung gleich der ersten Kennung ist, und
falls der Wert des zweiten Zählers gleich dem Wert des ersten Zählers ist, dann:
- Bestimmen einer zweiten Empfangszeit des zweiten Rahmens, und
falls die zwischen der zweiten Empfangszeit und der ersten Empfangszeit vergangene Zeitdauer länger als die vordefinierte Antwortverzögerung ist, wird dann der zweite Rahmen als eine Neuübertragung des ersten Rahmens betrachtet, und:
- Aktualisieren der der ersten Kennung zugeordneten Referenzparameter, indem die erste Empfangszeit durch die zweite Empfangszeit ersetzt wird.

6. Zentraler Server nach dem vorhergehenden Anspruch, wobei das Gateway, das den zweiten Rahmen weitergesendet hat, mit dem zentralen Server zeitlich synchronisiert ist, wobei der zentrale Server **dadurch gekennzeichnet ist, dass**, falls außerdem die zweite Empfangszeit kleiner als die erste Empfangszeit ist, der erste Rahmen dann als eine Neuübertragung des zweiten Rahmens betrachtet wird und der zentrale Server dafür eingerichtet ist, die der ersten Kennung zugeordneten Referenzparameter nicht zu aktualisieren.

7. Zentraler Server nach Anspruch 5 oder 6, wobei das Gateway, das den zweiten Rahmen weitergesendet hat, nicht mit dem zentralen Server zeitlich synchronisiert ist, wobei der erste Rahmen auf einer ersten Trägerfrequenz gesendet wird, wobei der zentrale Server dafür eingerichtet ist, die erste Trägerfrequenz als der ersten Kennung zugeordneten Referenzparameter zu speichern, wobei der zweite Rahmen auf einer zweiten Trägerfrequenz gesendet wird, wobei der zentrale Server **dadurch gekennzeichnet ist, dass**, falls die zwischen der zweiten Empfangszeit und der ersten Empfangszeit vergangene Zeitdauer nicht länger als die vordefinierte Antwortverzögerung ist und die zweite Trägerfrequenz von der ersten Trägerfrequenz verschieden ist, der zweite Rahmen dann als eine Neuübertragung des ersten Rahmens betrachtet wird und der zentrale Server eingerichtet ist zum:
- Aktualisieren der der ersten Kennung zugeordneten Referenzparameter, indem die erste Empfangszeit durch die zweite Empfangszeit und die erste Trägerfrequenz durch die zweite Trägerfrequenz ersetzt wird.

8. Zentraler Server nach Anspruch 5, 6 oder 7, wobei der zentrale Server **dadurch gekennzeichnet ist, dass**, falls der Wert des zweiten Zählers größer als der Wert des ersten Zählers ist, der zentrale Server dann eingerichtet ist zum:
- Aktualisieren der der ersten Kennung zugeordneten Referenzparameter, indem die erste Empfangszeit durch die zweite Empfangszeit, die erste Trägerfrequenz durch die zweite Trägerfrequenz und der Wert des ersten Zählers durch den Wert des zweiten Zählers ersetzt wird.

9. Computerprogramm, **dadurch gekennzeichnet, dass** es Anweisungen umfasst, um durch einen Prozessor (501) das Verfahren nach einem der Ansprüche 1 bis 4, das die Detektion einer Neuübertragung, durch eine elektronische Vorrichtung, eines von der elektronischen Vorrichtung zuvor gesendeten Rahmens ermöglicht, durchzuführen, wenn das Computerprogramm von dem Prozessor ausgeführt wird.

10. Aufzeichnungsmedium, auf welchem das Programm nach Anspruch 9 gespeichert ist.

## Claims

1. Method (200) for detecting a resending by an electronic device (101) of a frame previously sent by the electronic device, the electronic device sending each frame on one carrier frequency among a predetermined plurality of carrier frequencies, each sent frame comprising an identifier associated with the electronic device and a counter, the value of the counter remaining identical when a frame is resent and being incremented at the time of sending of a new frame, each sent frame being received by a plurality of radio receivers, known as gateways (120, 12i, ..., 12N), each gateway being connected to the same central server (110) and retransmitting each received frame to the central server, a response delay being predefined for sending in return a frame to the electronic device, the method being executed by the central server and comprising the steps of:
- receiving (202, 208) a first frame comprising a first identifier and a first counter,
- determining a first reception time of receiving the first frame,
- storing (207) the first reception time and the value of the first counter as reference parameters associated with a first identifier,
- receiving (208) a second frame comprising a second identifier and a second counter,
if the second identifier is equal to the first identifier and
if the value of the second counter is equal to the value of the first counter, then:
- determining a second reception time of receiving the second frame and,
if the time elapsed between the second reception time and the first reception time is greater than the predefined response delay, then the second frame is considered to be a resending of the first frame, and
- updating (207) the reference parameters associated with the first identifier by replacing the first reception time by the second reception time.

2. Method according to claim 1, **characterised in that**, the gateway that retransmitted the second frame being synchronised timewise with the central server, if furthermore the second reception time is less than the first reception time, then the first frame is considered to be a resending of the second frame and the step (207) of updating the reference parameters associated with the first identifier is not executed.

3. Method according to either of the preceding claims, **characterised in that**, the gateway that retransmitted the second frame not being synchronised timewise with the central server, the first frame being sent on a first carrier frequency, the first carrier frequency being stored as reference parameters associated with the first identifier, the second frame being sent on a second carrier frequency, if the difference between the second reception time and the first reception time is not greater than the predefined response delay and the second carrier frequency is different from the first carrier frequency, then the second frame is considered to be a resending of the first frame, and the method comprises the step of:
- updating the reference parameters associated with the first identifier by replacing the first reception time by the second reception time and the first carrier frequency by the second carrier frequency.

4. Method according to any one of the preceding claims, **characterised in that**, if the value of the second counter is greater than the value of the first counter, then the method comprises a step of:
- updating the reference parameters associated with the first identifier by replacing the first reception time by the second reception time, the first carrier frequency by the second carrier frequency and the value of the first counter by the value of the second counter.

5. Central server (110) of a communication network comprising at least one electronic device (101) sending a frame on a carrier frequency among a predetermined plurality of carrier frequencies, each sent² frame comprising an identifier associated with the electronic device and a counter, the value of the counter remaining identical when a frame is resent and being incremented when a new frame is sent, each sent frame being received by a plurality of radio receivers, referred to as gateways (120, 12i, ..., 12N), each gateway being connected to the central server and retransmitting each frame received to the central server, a response delay being predefined for sending in return a frame to the electronic device, the central server being adapted for:
- receiving a first frame comprising a first identifier and a first counter,
- determining a first reception time of receiving the first frame,
- storing the first reception time and the value of the first counter as reference parameters associated with the first identifier,
- receiving a second frame comprising a second identifier and a second counter, if the second identifier is equal to the first identifier and
if the value of the second counter is equal to the value of the first counter, then:
- determining a second reception time of receiving the second frame, and
if the time elapsed between the second reception time and the first reception time is greater than the predefined response delay, then the second frame is considered to be a resending of the first frame, and
- updating the reference parameters associated with the first identifier by replacing the first reception time by the second reception time.

6. Central server according to the preceding claim, the second gateway that retransmitted the second frame being synchronised timewise with the central server, the central server being **characterised in that**, if furthermore the second reception time is less than the first reception time, then the first frame is considered to be a resending of the second frame and the central server is adapted for not updating the reference parameters associated with the first identifier.

7. Central server according to claim 5 or claim 6, the gateway that retransmitted the second frame not being synchronised timewise with the central server, the first frame being sent on a first carrier frequency, the central server being adapted for storing the first carrier frequency as reference parameters associated with the first identifier, the second frame being sent on a second carrier frequency, the central server being **characterised in that**, if the time elapsed between the second reception time and the first reception time is not greater than the predefined response delay and the second carrier frequency is different from the first carrier frequency, then the second frame is considered to be a resending of the first frame, and the central server is adapted for:
- updating the reference parameters associated with the first identifier by replacing the first reception time by the second reception time and the first carrier frequency by the second carrier frequency.

8. Central server according to claim 5, 6 or 7, the central server being **characterised in that**, if the value of the second counter is greater than the value of the first counter, then the central server is adapted for:
- updating the reference parameters associated with the first identifier by replacing the first reception time by the second reception time, the first carrier frequency by the second carrier frequency and the value of the first counter by the value of the second counter.

9. Computer program, **characterised in that** it comprises instructions for implementing, by a processor (501), of the method for detecting a resending by an electronic device of a frame previously sent by the electronic device, according to any one of claims 1 to 4, when the computer program is executed by the processor.

10. Recording medium on which the program according to claim 9 is stored.
